# EUROPÄISCHE PATENTANMELDUNG

(11) **EP 1 245 350 A1**
(43) Veröffentlichungstag der Anmeldung: **02.10.2002**
(21) Anmeldenummer: 02006088.5
(22) Anmeldetag: 18.03.2002
(51) Int. Cl.: B25J 19/06, B25J 15/04

(54) **Maschine mit einem wechselbaren Werkzeug und einer Kollisionsschutz-Einrichtung**

(30) Priorität: 29.03.2001 DE 10115661
(71) Anmelder: Dürr Systems GmbH, 70435 Stuttgart (DE)
(72) Erfinder: Giuliano, Stefano, 70839 Gerlingen (DE); Melcher, Rainer, 71720 Oberstenfeld (DE)
(74) Vertreter: Heusler, Wolfgang, Dipl.-Ing.

(57) **Zusammenfassung**

Das werkzeugseitige bewegliche Teil (2) der Kollisionsschutzeinrichtung eines Roboters ist räumlich mit dem roboterseitigen Festteil (1) einer Werkzeugwechseleinrichtung integriert.

## Beschreibung

Die Erfindung betrifft eine Maschine mit einem automatisch bewegbaren Werkzeug und einer Werkzeugwechseleinrichtung gemäß dem Oberbegriff des Anspruchs 1. Insbesondere kann es sich um einen Roboter und bei dessen Werkzeug um einen Zerstäuber für die Serienbeschichtung von Werkstücken wie beispielsweise Fahrzeugkarossen handeln.

Stand der Technik sind Roboter mit einem Werkzeugwechsler, der aus zwei Flanschen besteht, von denen der eine das Festteil am Roboter bildet und der andere als lösbares Teil das Werkzeug trägt. Diese beiden Teile können zweckmäßig durch pneumatische Kräfte zusammengehalten und zum Werkzeugwechsel durch Öffnen eines pneumatischen Schließzylinders gelöst werden. Beispielsweise im Fall eines Lackierroboters gehören zu dem Werkzeugwechsler Kupplungen für die erforderlichen Pneumatik-, Flüssigkeits- und Elektrikleitungen usw.

Baulich getrennt von dem Werkzeugwechsler ist bei bekannten Robotern deren Kollisionsschutzeinrichtung, die ebenfalls durch einen fest an der Maschine angebauten Flansch und einen bei Kollisionen relativ zu ihm beweglichen werkzeugseitigen Flansch gebildet ist. Diese beiden Teile werden mit Luftdruck oder Federkraft auseinandergespreizt und in eine zentrierte Endstellung gepresst. Bei einer Kollision erfolgt eine Auslenkung des werkzeugseitigen beweglichen Teils, die von einem Sensor festgestellt wird, der ein Not-Halt-Signal zum schnellstmöglichen Anhalten des Roboters erzeugt.

Aufgabe der Erfindung ist eine Reduzierung der Baulänge der Maschine in der Längsrichtung des Festteils.

Diese Aufgabe wird durch die Merkmale der Patentansprüche gelöst.

Das bewegliche Teil des Kollisionsschutzes und das roboterseitige Festteil des Werkzeugwechslers sind also räumlich zu einem Bauteil integriert. Die dadurch erreichte Reduzierung der Baulänge kommt u. a. der Beweglichkeit des Werkzeugs zugute, beispielsweise wenn schwierig erreichbare Bereiche einer Fahrzeugkarosse lackiert werden sollen.

An dem in der Zeichnung dargestellten Ausführungsbeispiel wird die Erfindung näher erläutert. Es zeigen
- Fig. 1: eine Ausführungsform mit bei einer Kollision axial relativ zueinander verschobenen Fest- und Losteilen;
- Fig. 2: die Ausführungsform gemäß Fig. 1 mit bei einer Kollision gegeneinander verschwenkten Fest- und Losteilen; und
- Fig. 3: eine bekannte Kollisionsschutzeinrichtung.

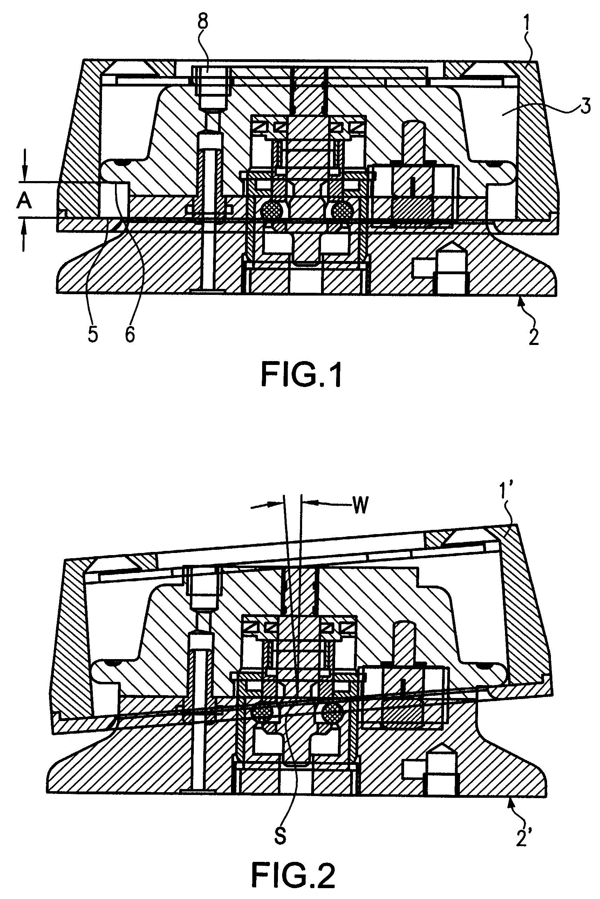

Die in Fig. 1 dargestellte Vorrichtung enthält ein Festteil 1, das fest an einem Lackierroboter angebracht sein kann, und ein mit einem Zerstäuber verbundenes Losteil 2. Der Zerstäuber ist auswechselbar an dem Roboter montiert.

Im Normalfall werden die Teile 1 und 2 beispielsweise von einem mit Druckluft beaufschlagten Schließzylinder 3 oder durch Federkraft in eine zentrierte Endlage (nicht dargestellt) auseinandergespreizt, wobei die Fläche 5 des Festteils 1 an der Fläche 6 des Losteils 2 anliegt.

Bei einer Kollision findet eine Auslenkung des werkzeugseitigen beweglichen Teils statt, bei dem betrachteten Beispiel also des Teils 2. Im Fall der Ausführungsform nach Fig. 1 erfolgt eine Linearverschiebung längs der Zerstäuberachse um den Betrag A (beispielsweise in der Größenordnung von 10 mm). Die Auslenkung kann von einem Sensor festgestellt werden, der ein Not-Halt-Signal für den Roboter erzeugt.

Bei 8 können an das roboterseitige Festteil 1 die für den Betrieb nötigen Schläuche und Kabel von der Roboterhandachse angeschlossen sein.

Die Darstellung nach Fig. 2 unterscheidet sich von der nach Fig. 1 im wesentlichen dadurch, daß das werkzeugseitige Losteil 2', an dem der Zerstäuber befestigt ist, bei einer Kollision gegen das roboterseitige Festteil 1' um einen Winkel W verschwenkt wird (die Auslenkung kann beispielsweise in der Größenordnung von 5° betragen). Die Schwenkachse verläuft darstellungsgemäß bei S quer zu der Längsrichtung des Festteils, die im Normalbetrieb der Zerstäuberachse entspricht, an einer von dem roboterseitigen Ende des Teils 2' beabstandeten Stelle durch das Teil 2'.

Bei Fig.1 und 2 kann es sich um eine Ausführungsform handeln, bei der sowohl eine Linearverschiebung als auch eine Schwenkbewegung möglich ist, die jeweils durch geeignete Sensoren erfasst werden können.

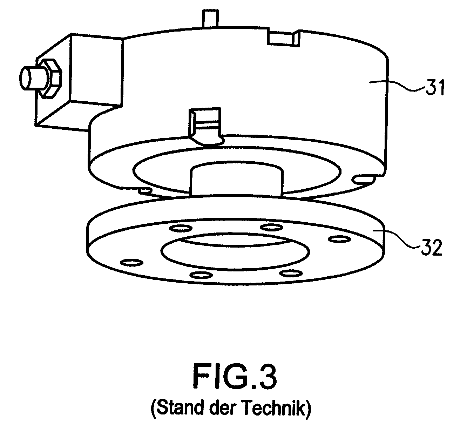

Die aus den oben beschriebenen Darstellungen ersichtliche Integration des beweglichen Kollisionsschutzteils 2, 2' mit dem Festteil 1, 1' zu einer Baueinheit hat u.a. den eingangs erwähnten Vorteil. Der Vorteil dieser kompakten und platzsparenden Baueinheit wird beim Vergleich mit Fig. 3 deutlich, wo eine typische Kollisionsschutzeinrichtung der für Roboter bisher verwendeten Art gezeigt ist, deren werkzeugseitiges Losteil 32 bei einer Kollision axial gegen das roboterseitige Festteil 31 geschoben wird.

## Patentansprüche

1. Maschine mit einem automatisch bewegbaren Werkzeug und einer Werkzeugwechseleinrichtung, die durch ein an der Maschine angebrachtes, in seiner Längsrichtung vor dem Werkzeug endendes Festteil (1) und ein davon lösbares, das Werkzeug tragendes Teil gebildet ist,
und mit einer Kollisionsschutzeinrichtung mit einem bei Kollisionen des Werkzeugs mit einem externen Gegenstand zum Schutz gegen Beschädigungen relativ zu der Maschine beweglichen Teil (2), das mit dem Werkzeug und im Normalbetrieb mit der Maschine fest verbunden und zentriert oder ausgerichtet ist,
sowie einem Sensor, der bei der Relativbewegung zwischen dem beweglichen Kollisionsschutzteil (2) und der Maschine ein zum Anhalten der Maschine verwendbares Signal erzeugt,
**dadurch gekennzeichnet, daß** das bewegliche Kollisionsschutzteil (2) mit dem Festteil (1) der Werkzeugwechseleinrichtung zu einer Baueinheit integriert ist.

2. Maschine nach Anspruch 1, **dadurch gekennzeichnet, daß** das bewegliche Kollisionsschutzteil (2, 2') sich zu einem wesentlichen Teil innerhalb oder längs des Festteils (1, 1') der Werkzeugwechseleinrichtung erstreckt, so daß es in einer von dem werkzeugseitigen Ende des Festteils beabstandeten Ebene endet, die quer zu der Längsrichtung durch das Festteil verläuft.

3. Maschine nach Anspruch 1 oder dessen Oberbegriff, **dadurch gekennzeichnet, daß** das bewegliche Kollisionsschutzteil (2') um eine Achse (S) schwenkbar angeordnet ist, die quer zu der Längsrichtung des Festteils (1') der Werkzeugwechseleinrichtung an einer von dem maschinenseitigen Ende des beweglichen Teils (2') beabstandeten Stelle durch dieses Teil (2') verläuft.

4. Maschine nach Anspruch 1, 2 oder 3, **dadurch gekennzeichnet, daß** das eine Teil (2) innerhalb des anderen Teils (1') linear verschiebbar ist.
